(19) Europäisches Patentamt
European Patent Office
Office européen des brevets

(11) **EP 4 553 696 A2**

(12) **EUROPEAN PATENT APPLICATION**

(43) Date of publication:
**14.05.2025 Bulletin 2025/20**

(21) Application number: **25154117.3**

(22) Date of filing: **27.01.2025**

(51) International Patent Classification (IPC):
**G06F 40/279** (2020.01)     **G06F 40/30** (2020.01)
**G06F 21/50** (2013.01)

(52) Cooperative Patent Classification (CPC):
**G06F 40/279; G06F 40/30;** G06F 21/50

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.05.2024 CN 202410606832**

(71) Applicant: **Beijing Youzhuju Network Technology
Co., Ltd.
Beijing 101299 (CN)**

(72) Inventors:
• **Zhang, Yuchen
  Beijing, 100028 (CN)**
• **Huang, Guanhua
  Beijing, 100028 (CN)**
• **Li, Zhe
  Beijing, 100028 (CN)**
• **You, Yongjian
  Beijing, 100028 (CN)**

(74) Representative: **Grünecker Patent- und
Rechtsanwälte
PartG mbB
Leopoldstraße 4
80802 München (DE)**

(54) **TEXT DETECTION METHOD, APPARATUS, DEVICE AND STORAGE MEDIUM**

(57)     Embodiments of the present disclosure provide a text detection method and apparatus, a device, and a storage medium. The method includes: determining a text feature of a target text; performing, by using a trained text reconstruction model, noise addition on the text feature to obtain a text feature after noise addition, where the noise addition includes performing noise addition on a text feature corresponding to a text element in the target text; and determining, by using a trained text detection model and based on the text feature after noise addition, a detection result of the target text, where the detection result indicates whether the target text is generated by a machine learning model. In this manner, the capability of coping with adversarial attacks is increased by actively adding noise.

**FIG. 1**

EP 4 553 696 A2

## Description

### FIELD

Example embodiments of the present disclosure generally relate to the field of computers, and in particular, to a text detection method, an apparatus, a device, and a computer-readable storage medium.

### BACKGROUND

The rapid development of machine learning models has raised concerns about the potential abuse of texts generated by machine learning models. Current detection means can achieve the recognition of texts generated by machine learning models to some extent. However, the current detection means may have a low recognition accuracy in the case of an adversarial perturbation.

### SUMMARY

**In** a first aspect of the present disclosure, a text detection method is provided. The method may include: determining a text feature of a target text; performing, by using a trained text reconstruction model, noise addition on the text feature to obtain a text feature after noise addition, where the noise addition includes performing noise addition on a text feature corresponding to a text element in the target text; and determining, by using a trained text detection model and based on the text feature after noise addition, a detection result of the target text, where the detection result indicates whether the target text is generated by a machine learning model.

**In** a second aspect of the present disclosure, a text detection apparatus is provided. The apparatus may include: a text feature determination module configured to determine a text feature of a target text; a noise addition module configured to perform, by using a trained text reconstruction model, noise addition on the text feature to obtain a text feature after noise addition, where the noise addition includes performing noise addition on a text feature corresponding to a text element in the target text; and a detection module configured to determine, by using a trained text detection model and based on the text feature after noise addition, a detection result of the target text, where the detection result indicates whether the target text is generated by a machine learning model.

In a third aspect of the present disclosure, an electronic device is provided. The device includes at least one processing unit; and at least one memory, where the at least one memory is coupled to the at least one processing unit and stores instructions executable by the at least one processing unit, and the instructions, when executed by the at least one processing unit, cause the electronic device to perform the method according to the first aspect.

**In** a fourth aspect of the present disclosure, a computer-readable storage medium is provided. A computer program is stored on the medium, and the computer program, when executed by a processor, implements the method according to the first aspect.

**In** a fifth aspect of the present disclosure, a computer program product or a computer program is provided. The computer program product or the computer program includes computer instructions, and the computer instructions are stored in a computer-readable storage medium. A processor of a computer device reads the computer instructions from the computer-readable storage medium, and the processor executes the computer instructions, causing the computer device to perform the method provided in various optional implementations in one aspect of the embodiments of the present application. In other words, the computer instructions, when executed by the processor, implement the method provided in various optional implementations in one aspect of the embodiments of the present application.

It should be understood that the content described in this section is not intended to limit the key or important features of the embodiments of the present disclosure, nor is it intended to limit the scope of the present disclosure. Other features of the present disclosure will become easy to understand through the following description.

### BRIEF DESCRIPTION OF THE DRAWINGS

The above and other features, advantages and aspects of the embodiments of the present disclosure will become more apparent when taken in conjunction with the drawings and with reference to the following detailed description. In the drawings, the same or similar reference numerals refer to the same or similar elements, where:

FIG. 1 shows a schematic diagram of an example environment in which the embodiments of the present disclosure can be implemented;
FIG. 2 shows a flowchart of a text detection method according to some embodiments of the present disclosure;
FIG. 3 shows an example diagram of a text detection process according to some embodiments of the present disclosure;

FIG. 4 shows a schematic diagram of training a text reconstruction model according to some embodiments of the present disclosure;

FIG. 5 shows a schematic structural block diagram of an apparatus for text detection according to some embodiments of the present disclosure; and

FIG. 6 shows a block diagram of an electronic device that can implement one or more embodiments of the present disclosure.

## DETAILED DESCRIPTION

The embodiments of the present disclosure will be described in more detail with reference to the accompanying drawings, in which some embodiments of the present disclosure have been illustrated. However, it should be understood that the present disclosure can be implemented in various manners, and thus should not be construed to be limited to embodiments disclosed herein. On the contrary, those embodiments are provided for the thorough and complete understanding of the present disclosure. It should be understood that the drawings and embodiments of the present disclosure are only used for illustration, rather than limiting the protection scope of the present disclosure.

The embodiments of the present disclosure will be described in more detail below with reference to the drawings. Although some embodiments of the present disclosure are shown in the drawings, it should be understood that the present disclosure can be implemented in various forms, and should not be construed as limited to the embodiments set forth herein. Rather, these embodiments are provided for a thorough and complete understanding of the present disclosure. It should be understood that the drawings and embodiments of the present disclosure are only for illustrative purposes, and are not intended to limit the protection scope of the present disclosure.

In the description of the embodiments of the present disclosure, the term "include/comprise" and similar terms should be understood as open-ended inclusions, that is, "include/comprise but not limited to". The term "based on" should be understood as "at least partially based on". The term "an embodiment" or "the embodiment" should be understood as "at least one embodiment". The term "some embodiments" should be understood as "at least some embodiments". Other explicit and implicit definitions may also be included below.

In this document, unless explicitly stated, performing a step "in response to A" does not mean that the step is performed immediately after "A", but may include one or more intermediate steps.

It can be understood that the data involved in the technical solution of the present application (including but not limited to the data itself, the acquisition, use, storage or deletion of the data) should comply with the requirements of corresponding laws, regulations and related provisions.

It can be understood that before using the technical solutions disclosed in the embodiments of the present disclosure, relevant users should be informed of the type, scope of use, usage scenario, etc. of the information involved in the present disclosure and authorization of the relevant users should be obtained in an appropriate manner in accordance with relevant laws and regulations, where the relevant users may include any type of rights holder, such as an individual, an enterprise, or a group.

For example, when receiving an active request from a user, prompt information is sent to the relevant user to explicitly prompt the relevant user that an operation requested to be performed will require the acquisition and use of information of the relevant user, so that the relevant user can choose whether to provide information to software or hardware such as an electronic device, an application, a server or a storage medium that performs the operation of the technical solution of the present disclosure according to the prompt information.

As an optional but non-restrictive implementation, in response to receiving an active request from a relevant user, prompt information may be sent to the relevant user by means of a pop-up window, and the prompt information may be presented in the pop-up window in the form of text. In addition, the pop-up window may carry a selection control for the user to select "agree" or "disagree" to provide information to the electronic device.

It can be understood that the above process of notifying and obtaining user authorization is only illustrative, and does not constitute a limitation to the implementations of the present disclosure. Other methods that meet relevant laws and regulations may also be applied to the implementations of the present disclosure.

As used herein, the term "model" can learn the association between corresponding inputs and outputs from training data, so that corresponding outputs can be generated for given inputs after the training is completed. The generation of the model may be based on a machine learning technology. Deep learning is a machine learning algorithm that processes inputs and provides corresponding outputs by using multiple processing units. A neural network model is an example of a model based on deep learning. In this document, the "model" may also be referred to as a "machine learning model", a "learning model", a "machine learning network" or a "learning network", and these terms are used interchangeably herein.

A "neural network" is a machine learning network based on deep learning. The neural network can process an input and provide a corresponding output, and typically includes an input layer and an output layer and one or more hidden layers between the input layer and the output layer. The neural network used in the deep learning application typically includes many hidden layers, thereby increasing the depth of the network. The layers of the neural network are connected in sequence, so that the output of a former layer is provided as the input of a latter layer, where the input layer receives the input of the neural network, and the output of the output layer is used as the final output of the neural network. Each layer of the neural network includes one or more nodes (also referred to as processing nodes or neurons), and each node processes an input from an upper layer.

Generally, machine learning may generally include three stages, that is, a training stage, a testing stage, and an application stage (also referred to as an inference stage). In the training stage, a given model may be trained using a large amount of training data, and the parameter values are continuously updated iteratively until the model can obtain consistent inference that satisfies an expected objective from the training data. Through training, the model may be considered to be able to learn the association (also referred to as input-to-output mapping) from the input to the output from the training data. The parameter values of the trained model are determined. In the testing stage, a test input is applied to the trained model to test whether the model can provide a correct output, so as to determine the performance of the model. The testing stage may sometimes be incorporated into the training stage. In the application or inference stage, the trained model may be used to process an actual model input based on the parameter values obtained through training, to determine a corresponding model output.

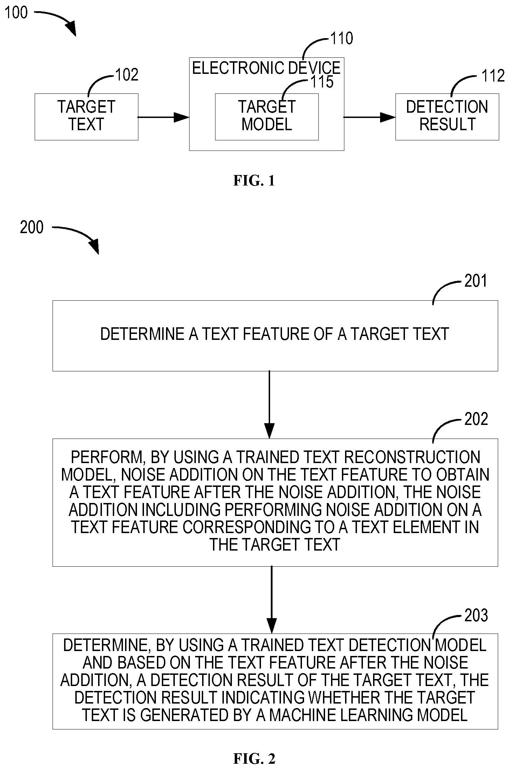

FIG. 1 shows a schematic diagram of an example environment 100 in which the embodiments of the present disclosure can be implemented. As shown in FIG. 1, the environment 100 may include an electronic device 110.

The electronic device 110 can obtain a target text 102. The target text 102 can be provided in different formats, such as a Portable Document Format (PDF), PPT, Word, etc. In addition, the target text 102 may also be a text in a web page, etc. The target text 102 may be a text that is stored locally in the electronic device 110 or a text that is obtained by the electronic device 110 from other electronic devices (such as a remote device). The electronic device 110 may perform a detection task on the target text 102 to determine a detection result 112 for the target text 102. For example, the detection result may be that the target text is a text generated by a machine learning model, or that the target text is not a text generated by a machine learning model. For example, the text generated by the machine learning model may also correspond to a text generated by generative artificial intelligence. For example, the generative artificial intelligence may refer to an artificial intelligence technology that utilizes complex algorithms, models, and rules to learn from large-scale datasets to create new original content.

The electronic device 110 may perform an object detection task by using a trained target model 115, for example. The target model 115 may include, for example, but not limited to, any appropriate model such as a Transformer model, a convolutional neural network (CNN), a recurrent neural network (RNN) or a deep neural network (DNN). The target model 115 may be a local model of the electronic device 110 or a model installed in another electronic device 110 (for example, installed in a remote device). It should be noted that the target model 115 may be a single model or may include multiple models. As will be described below, in the embodiments of the present disclosure, the target model 115 may at least include a text reconstruction model and a text detection model. The multiple models may be end-to-end models. According to the actual scenario, the target model 115 may further include any other appropriate models, for example, a related model for determining a text feature of the target text.

The electronic device 110 may include any computing system with computing power, such as various computing devices/systems, terminal devices, server-side devices, etc. The terminal device may be any type of mobile terminal, stationary terminal or portable terminal, including a mobile phone, a desktop computer, a laptop computer, a notebook computer, a netbook computer, a tablet computer, a media computer, a multimedia tablet, a palmtop computer, a portable game terminal, a VR/AR device, a Personal Communication System (PCS) device, a personal navigation device, a personal digital assistant (PDA), an audio/video player, a digital camera/camcorder, a positioning device, a television receiver, a radio broadcast receiver, an e-book device, a game device or any combination thereof, including accessories and peripherals of these devices or any combination thereof. The server-side device may be an independent physical server, or a server cluster or a distributed system composed of multiple physical servers, or a cloud server that provides basic cloud computing services such as cloud services, cloud databases, cloud computing, cloud functions, cloud storage, network services, cloud communication, middleware services, domain name services, security services, content delivery networks, and big data and artificial intelligence platforms. The server-side device may include, for example, a computing system/server, such as a mainframe, an edge computing node, a computing device in a cloud environment, etc.

It should be understood that the structure and function of various elements in the environment 100 are only described for the purpose of illustration, without implying any limitation to the scope of the present disclosure.

Nowadays, there are more and more cases of generating texts using machine learning models. There are some problems in generating texts using machine learning models, for example, the credibility of text content generated by machine learning models, the problem of incorrect viewpoints in text content, and so on. If the texts generated by the machine learning model cannot be accurately recognized, negative impacts may be generated.

There are already some technologies that can detect whether a text is generated by a machine learning model. However, related solutions are very sensitive to adversarial attacks, and even minor modifications may lead to misjudgment by the detector. In extreme cases, for continuous adversarial attacks, for example, multiple modifications, at least one word is modified each time. Then, after multiple modifications, the related solution may usually misjudge whether the text is generated by the machine learning model.

FIG. 2 shows an example flow 200 of a text detection method according to some embodiments of the present disclosure. For ease of discussion, the flow 200 will be described with reference to the environment of FIG. 1. The flow 200 relates to a stage after the target model 115 is trained, and may be implemented in the electronic device 110.

At block 201, the electronic device 110 determines a text feature of a target text.

The target text 102 may be in different formats, such as PDF, PPT, Word, etc. In addition, the target text 102 may also be a text in a web page, etc. After acquiring the target text, the electronic device 110 may preprocess the target text first, thereby determining the text feature of the target text 102.

For example, when determining the text feature, the electronic device 110 may first perform text element splitting processing on the text in the target text 102 to obtain multiple text elements. The text element may be a character as the splitting unit, or a word as the splitting unit, which is not limited here.

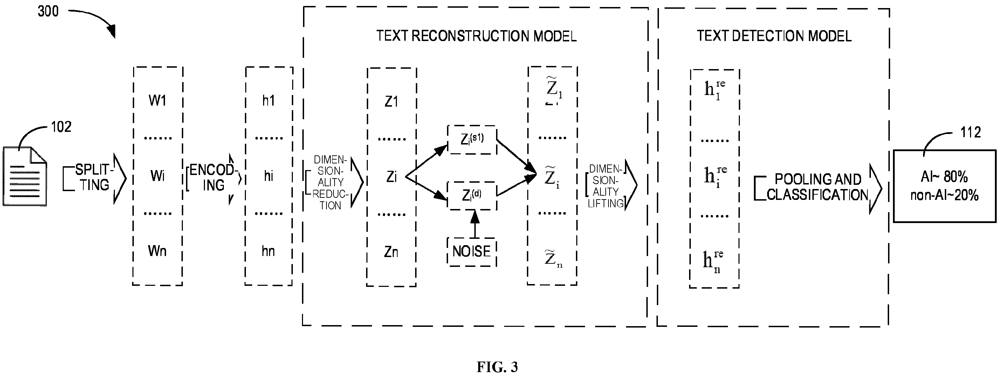

FIG. 3 shows a schematic diagram of a detection process 300 of a text detection method according to some embodiments of the present disclosure. With reference to FIG. 3, the multiple text elements may be represented as $W_1$, ..., $W_i$, ..., $W_n$, where n is a positive integer.

After determining the multiple text elements in the target text 102, the electronic device 110 may further encode the multiple text elements to obtain a vector representation of each text element. For example, the vector representation of each text element may be multi-dimensional, such as 768 dimensions, 512 dimensions, etc. With reference to FIG. 3, the vector representation of each text element may be $h_1$, ..., $h_i$, ..., $h_n$. A set is formed by the vector representations of the text elements, and the set may correspond to the text feature of the target text.

For extraction of the text feature of the target text, existing text element feature extraction technologies may be used, for example, a word vector model (Word2Vec) or a global vector model (Global Vectors for Word Representation, GloVe) may be used.

At block 202, the electronic device 110 performs, by using a trained text reconstruction model, noise addition on the text feature to obtain a text feature after noise addition, where the noise addition includes performing noise addition on a text feature corresponding to a text element in the target text.

The function of the text reconstruction model may include performing noise addition on the text feature of the text element. For example, the noise addition may include performing noise addition on each text element, or performing noise addition on at least one text element. The noise addition may be random noise addition. For example, standard Gaussian noise may be introduced to reflect the randomness of the noise.

Before performing the noise addition, the electronic device 110 may further perform dimensionality reduction processing on the vector representation of each text element to obtain a feature set after the dimensionality reduction processing. The beneficial effect of the dimensionality reduction processing is that the computational cost of the electronic device 110 can be reduced. By performing the dimensionality reduction processing on the vector representation of each text element, the computational cost can be reduced and the computational efficiency can be improved in the noise addition process. In addition, during the noise addition process, the low-dimensional feature can reduce the influence of noise on the original semantics of the text element to a certain extent, and avoid excessive noise introduction that leads to over-fitting or performance degradation of the model, which would cause the model to be unstable. For example, the dimensionality reduction processing is performed on the vector representation of each text element, and the dimensionality is reduced from the original dimensionality (768 dimensions, 512 dimensions, etc.) to 32 dimensions, 64 dimensions, or 128 dimensions, etc. The above dimensions are only for illustrative purposes, and do not limit or constrain the actual scenario. Still with reference to FIG. 3, Zi in FIG. 3 may represent a text feature obtained after the dimensionality reduction processing is performed on the vector representation hi of the i-th text element, where i is a positive integer, and $1 \leq i \leq n$.

Still with reference to FIG. 3, in the example shown in FIG. 3, the text reconstruction model adds noise to the text feature corresponding to at least one text element. For example, semantic extraction is performed on the text feature Zi of the i-th text element after the dimensionality reduction processing to obtain a first semantic term and a second semantic term. The principles of the ways of obtaining the two semantic terms may be the same. Thereafter, noise addition may be performed on one of the semantic terms (for example, the second semantic term). For example, the noise addition may be to calculate a product of standard Gaussian noise and one of the semantic terms, and a product result may be used as a noise term. In FIG. 3, the noise term is denoted as $Z_i^{(d)}$. That is, some uncertainty or randomness is added to the original semantic feature (the second semantic term), thereby generating the noise term. The text feature after noise addition may be obtained by performing a summation calculation, an averaging calculation, or the like based on the other semantic term (the first semantic term $Z_i^{(s1)}$ shown in FIG. 3) and the noise term. In FIG. 3, for the i-th text element, the corresponding text feature after noise addition may be represented as $\tilde{Z}_i$. That is, the noise term is combined with the other semantic term, and a certain degree of reservation or weighting may be performed on the original semantic feature while noise is added. In addition, only one semantic term of the text element may be determined, and a result of adding noise to the one semantic term is used as the text feature of the text element after noise addition. For other ways of adding noise, details will not be described here.

After the noise addition is performed on the text feature corresponding to the at least one text element in the target text 102, the text features corresponding to all the text elements are formed into a set, which may correspond to the text feature after the noise addition. In addition, the noise addition may also be performed on the text feature corresponding to each text element, and then the text features corresponding to the respective text elements after the noise addition are formed into a set to correspond to the text feature after the noise addition. With reference to FIG. 3, the text feature after the noise addition may be a set composed of $\tilde{Z}_1$ to $\tilde{Z}_n$.

After the noise addition is performed, the text feature after the noise addition also needs to be subjected to dimensionality lifting processing to restore to the original dimensionality before the dimensionality reduction. Still taking the i-th text element as an example, in FIG. 3, the text feature after the noise addition may be represented as $\tilde{Z}_i$. After the dimensionality lifting is performed on the text feature $\tilde{Z}_i$ after the noise addition, it may correspond to $h_i^{re}$.

In the example in FIG. 3, the noise addition is performed on each text element, and thus the set composed of $h_1^{re}$ to $h_n^{re}$ after the dimensionality lifting processing may correspond to the text feature after the noise addition.

At block 203, the electronic device 110 determines, by using a trained text detection model and based on the text feature after noise addition, the detection result 112 of the target text, where the detection result 112 indicates whether the target text 102 is generated by a machine learning model.

The text detection model may be a model with a classification function, for example, the classification function may be implemented based on a transformer model, a convolutional neural network model, a recurrent neural network model, a deep neural network model, or the like. The classification function may be to judge whether the target text is generated by a machine learning model. The text detection model may perform recognition based on the text feature after noise addition, to obtain a recognition result of whether the target text is generated by the machine learning model. For example, the recognition process may include performing processing, such as maximum pooling or average pooling, on the text feature corresponding to each text element in the text feature after noise addition, and then obtaining the detection result 112 through a classification head. The detection result 112 may reflect, in the form of probability, whether the target text is generated by a machine learning model. The detection result 112 may be "the probability of being generated by the machine learning model is 80%". Alternatively, a probability threshold may also be set, and if the detection result 112 is not lower than the probability threshold, a conclusion that the target text is generated by the machine learning model may be obtained.

In some embodiments of the present application, by performing noise addition on the text feature corresponding to the text element in the target text, the capability of the text detection model to cope with adversarial attacks may be enhanced. The adversarial attack is a deliberately designed input perturbation, which is intended to mislead the detection result of the target text. By performing the noise addition on the text feature corresponding to the text element through the text reconstruction model, the text detection model may better adapt to the diversity and change of the text element, thereby increasing the robustness of the model to recognize different target texts, and finally improving the capability of the model to resist the attack and the detection performance.

In some embodiments, performing, by the electronic device 110, the noise addition on the text feature corresponding to the text element in the target text may include: determining, based on the text feature of the text element, semantic terms of the text element, where the semantic terms indicate a semantic feature of the text element, and the semantic terms at least include a first semantic term and a second semantic term; performing the noise addition on the second semantic term to obtain a noise term; and determining, based on the first semantic term and the noise term, a noise addition result of the text element.

The electronic device 110 may perform, by using the trained text reconstruction model, the noise addition on the text feature corresponding to the text element in the target text. In the noise addition process, the text reconstruction model may first determine the semantic term of the text element, and then may perform the noise addition based on the semantic term. The semantic term may be a semantic representation of one text element. Through vectorization and semantic mapping of the text element, and possible biasing or transformation processing, richer and deeper semantic concepts of the text element are obtained. Therefore, the noise addition may be performed on the original semantics of the text element, so that the deviation between the semantics indicated by the noise addition result and the original semantics of the text element is within a certain range.

For each text element, two semantic terms that are similar to each other may be determined. Still with reference to FIG. 3, semantic extraction is performed on the text feature Zi of the i-th text element in the target text after the dimensionality reduction as an example. The electronic device 110 performs, by using the trained text reconstruction model, semantic extraction on the text feature Zi of the i-th text element in the target text after the dimensionality reduction in a synchronous or asynchronous manner, to obtain the first semantic term and the second semantic term. For example, the principles and processes of the two semantic extraction operations may be the same, thereby obtaining the first semantic term and the second semantic term of the i-th text element.

Noise addition may be performed on one of the semantic terms to obtain the noise term. Taking performing noise addition on the second semantic term as an example, performing the noise addition may be introducing standard Gaussian noise. Since the semantic term is a multi-dimensional vector, the noise addition needs to be performed in a multi-dimensional space. For example, a product of the standard Gaussian noise and the second semantic term may be calculated, and a calculation result is used as the noise term.

After the noise term is obtained, the noise term may be combined with the other semantic term, to obtain the noise addition result of the i-th text element. If the noise term is obtained by performing noise addition on the second semantic term, the noise term is combined with the first semantic term. The combination of the noise term and the semantic term may be a feature summation calculation, that is, the feature corresponding to the noise term and the feature corresponding to the first semantic term are summed, and the calculation result is the noise addition result of the i-th text element.

The purpose of setting the two semantic terms is that even if a noise perturbation with a large amplitude is added to one semantic term to obtain the noise term, finally, the noise addition result is still determined based on the other semantic term, so that the deviation between the added noise and the original semantics may not be too large.

In some embodiments, determining, by the electronic device 110 and by using the trained text reconstruction model, the semantic term of the text element may include: performing, by using a semantic mapper in the text reconstruction model, semantic feature mapping on the text feature of the text element to obtain a semantic mapping result; and determining, by using a biaser in the text reconstruction model, a bias of the semantic mapping result to obtain the semantic term of the text element.

The semantic mapper in the text reconstruction model may be in the form of a weight matrix. For example, the semantic mapper may be represented as $W(s)$. Taking the semantic extraction performed on the text feature $Z_i$ of the i-th text element in the target text after the dimensionality reduction as an example, the semantic feature mapping performed on the text feature of the text element may be represented as $W(s)*Z_i$. Through matrix multiplication, the text feature of the i-th text element may be projected into a new feature space, and the new feature space may indicate the semantics of the text element. The dimension of the semantic mapper may be set according to the actual situation. For example, the dimension of the semantic mapper may be set to 4096 dimensions.

The biaser in the text reconstruction model may be in the form of a bias vector. For example, the bias vector may be represented as $b(s)$. Taking the semantic extraction performed on the text feature $Z_i$ of the i-th text element in the target text after the dimensionality reduction as an example, after the semantic feature mapping is performed, the bias still needs to be determined. Determining the bias after the semantic feature mapping may be represented as $W^{(s)}*Z_i+b^{(s)}$. The dimension of the biaser may be set according to the actual situation. For example, it may be set to 64 dimensions. The bias vector may be responsible for biasing and translating the result of the semantic feature mapping, and the center position of the result of the semantic feature mapping may be adjusted by adjusting the value of the bias vector, thereby affecting the fitting effect and generalization ability of the model.

In summary, the semantic term may be expressed as follows:

$$Z_i^{(s)}=W^{(s)}*Z_i+b^{(s)} \qquad (1)$$

Since there are two semantic terms, there may be differences in the semantic feature mapping and/or bias determination each time. Based on this, the first semantic term may be expressed as follows:

$$Z_i^{(s1)}=W^{(s)}*Z_i+b^{(s)} \qquad (2)$$

The second semantic term may be expressed as follows:

$$Z_i^{(s2)}=W^{(d)}*Z_i+b^{(d)} \qquad (3)$$

In the above expressions, both $W^{(s)}$ and $W^{(d)}$ may correspond to the semantic mapper in the text reconstruction model, and both $b^{(s)}$ and $b^{(d)}$ may correspond to the biaser in the text reconstruction model.

In some embodiments, in the training process, the text reconstruction model and the text detection model are jointly trained.

The training of the text reconstruction model and the text detection model may be performed in the electronic device 110 or in a third-party device. Taking the performance in the electronic device 110 as an example. The text reconstruction model and the text detection model may be jointly trained, and the two models form an end-to-end model. In addition, the word vector model or the global vector model used to determine the text feature may also be formed into the end-to-end model together with the text reconstruction model and the text detection model for overall training.

Alternatively, the text reconstruction model may be trained separately, and after the training is completed, the text reconstruction model, the word vector model or the global vector model, and the text detection model are spliced together.

In some embodiments, the text reconstruction model to be trained includes a first sub-model and a second sub-model with the same architecture, and the text reconstruction model is trained by: performing, by the electronic device 110 and by using the text reconstruction model to be trained, noise addition on a sample text feature of a sample text to obtain a sample text feature after noise addition, where the sample text feature after noise addition includes a first sample feature obtained by performing, by the first sub-model, noise addition on the sample text feature, and a second sample feature obtained by performing, by the second sub-model, noise addition on the sample text feature; determining, by using the text detection model and based on the sample text feature after noise addition, a sample detection result, where the sample detection result includes a first detection result determined based on the first sample feature, and a second detection result determined based on the second sample feature; training the text reconstruction model to be trained based on a difference to obtain the trained text reconstruction model, where the difference at least indicates a noise loss function between the sample text feature after noise addition and the sample text feature, and the noise loss function includes a first noise loss function between the first sample feature and the sample text feature, and a second noise loss function between the second sample feature and the sample text feature; and retaining one of the first sub-model or the second sub-model in the trained text reconstruction model.

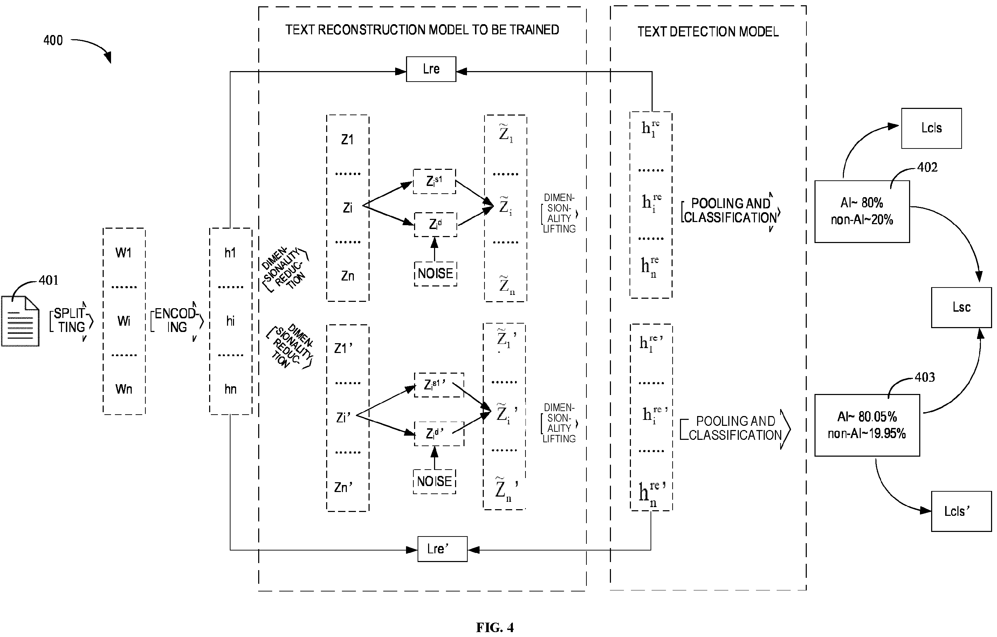

FIG. 4 shows a schematic diagram of a training process 400 of a text reconstruction model to be trained according to some embodiments of the present disclosure. The text reconstruction model to be trained includes two sub-models with the same architecture, i.e., a first sub-model and a second sub-model, and during the training process, parameters are shared between the two sub-models.

For a sample text 401, a sample text feature of the sample text 401 is first determined, and the determination process will not be described in detail. Thereafter, the sample text feature is sent to the first sub-model and the second sub-model, respectively. Taking the processing process of the first sub-model as an example, the first sub-model performs dimensionality reduction processing on the vector representation (hi) corresponding to each sample text element in the sample text to obtain the text feature of the sample text element. The dimensionality reduction may be from the original dimensionality to a specified dimensionality. For example, the original dimensionality may be 768 dimensions, 512 dimensions, etc. The specified dimensionality may be 32 dimensions, 64 dimensions, etc. After the dimensionality reduction processing, the text feature corresponding to each sample text element is represented as Zi.

The reconstruction model to be trained adds noise to the text feature corresponding to each sample text element after the dimensionality reduction processing to obtain the sample text feature after the noise addition. In FIG. 4, the sample text feature after the noise addition is represented as $\tilde{Z}_i$ .

Finally, the reconstruction model to be trained performs the dimensionality lifting processing on the sample text feature after the noise addition to restore to the original dimensionality. In FIG. 4, the sample text feature after the dimensionality lifting processing may be represented as $h_i^{re}$ . The set formed by the text features of the respective sample text elements after the dimensionality lifting processing may correspond to the sample text feature after the noise addition.

In FIG. 4, the sample text feature after the noise addition is represented by the set composed of $h_1^{re}$ to $h_n^{re}$ , which may correspond to the first sample feature obtained by performing, by the first sub-model, the noise addition on the sample text feature. Similarly, after performing the same processing as the first sub-model, the second sub-model may also obtain the sample text feature after the noise addition. In FIG. 4, the sample text feature after the noise addition obtained by the second sub-model is represented by the set composed of $h_1^{re'}$ to $h_n^{re'}$ , which may correspond to the second sample feature obtained by performing, by the second sub-model, the noise addition on the sample text feature.

The text detection model performs detection based on the first sample feature composed of $h_1^{re}$ to $h_n^{re}$ , to obtain a first detection result 402. For example, the first detection result 402 may be that the probability that the sample text is generated by the machine learning model is 80%, and the probability that the sample text is not generated by the machine learning model is 20%. In addition, the text detection model may further perform detection based on the second sample feature composed of $h_1^{re'}$ to $h_n^{re'}$ , to obtain a second detection result 403. For example, the second detection result 403 may be that the probability that the sample text is generated by the machine learning model is 80.05%, and the probability that the sample text is not generated by the machine learning model is 19.95%.

In the training process of the text reconstruction model, a noise loss function between the sample text feature after the noise addition and the sample text feature (before the noise addition) may be referred to. The noise loss function may indicate information such as a difference between the sample text feature after the noise addition and the sample text feature, and an amplitude of the added noise. The noise loss function may include a first noise loss function between the first sample feature and the sample text feature (corresponding to $L_{re}$ in FIG. 4), and a second noise loss function between the second sample feature and the sample text feature (corresponding to $L_{re}'$ in FIG. 4).

In the training process, since the text reconstruction model includes two sub-models with the same architecture, i.e., the first sub-model and the second sub-model, parameters are shared between the two sub-models. After the training is completed, one of the two first sub-models and the two second sub-models with the same architecture needs to be selected in the trained text reconstruction model. That is, the trained text reconstruction model includes only one sub-model.

By performing the noise addition on the text feature corresponding to the text element in the sample text in the training process, the capability of the text detection model to cope with the adversarial attack can be improved in the training process, so that the trained text detection model can better adapt to the diversity and change of the text element, thereby increasing the robustness of the model to recognize different target texts, and finally improving the capability of the model to resist the attack and the detection performance.

In some embodiments, the noise loss function between the sample text feature after the noise addition and the sample text feature is determined by a similarity loss function and a noise loss function, where the similarity loss function is used to indicate a similarity between the sample text feature after the noise addition and the sample text feature, and the noise loss function is used to indicate a penalty rule for an amplitude of the noise addition.

The noise loss function may be used to indicate information such as a difference between the sample text feature after the noise addition and the sample text feature (before the noise addition), and an amplitude of the added noise. Therefore, the noise loss function may be determined by the similarity loss function and the noise loss function. The similarity loss function may indicate the difference between the sample text feature after the noise addition and the sample text feature, and the noise loss function may be used to indicate the penalty rule for the amplitude of the noise addition. That is, when the electronic device 110 trains the text reconstruction model by using the noise loss function, it is required to satisfy that the generated noise term is appropriate, that is, the similarity between the sample feature after the noise addition and the sample feature based on the noise term is not lower than a similarity threshold, and the amplitude of the noise addition is not lower than an amplitude threshold. With reference to FIG. 4, the noise loss function includes a first noise loss function $L_{re}$ corresponding to the first sub-model and a second noise loss function $L_{re}'$ corresponding to the second sub-model.

In some embodiments, determining the noise loss function includes: for a sample text element in the sample text, obtaining a noise term in a text feature of the sample text element, where the text feature of the sample text element includes a first semantic term of the sample text element and a second semantic term of the sample text element, and the noise term is obtained by performing the noise addition on the second semantic term of the sample text element; determining a vector length of the noise term, where the vector length is used to indicate a semantic richness of the sample text element; determining a penalty term for the vector length, where the penalty term is configured to be inversely proportional to a value of the vector length; and determining the noise loss function based on the vector length and the penalty term.

Still with reference to FIG. 4, the electronic device 110 performs, by using the semantic mapper in the text reconstruction model to be trained, the semantic feature mapping on the feature corresponding to each sample text element after the dimensionality reduction to obtain the semantic mapping result. Then, the bias of the semantic mapping result is determined by the biaser in the reconstruction model to be trained, to obtain the semantic term of each text element.

Each sample text element includes two semantic terms, and a determination manner of the first semantic term of the sample text element may be expressed as follows:

$$Z_i^{s1}=W^s*Z_i+b^s \qquad\qquad (4)$$

A determination manner of the second semantic term of the sample text element may be expressed as follows:

$$Z_i^{s2}=W^d*Z_i+b^d \qquad\qquad (5)$$

The principles of determining the first semantic term and the second semantic term of the sample text element are the same as those of the expressions (2) and (3). In the expressions (4) and (5), both $W^s$ and $W^d$ may correspond to the semantic mapper in the text reconstruction model to be trained, and both bs and bd may correspond to the biaser in the text reconstruction model to be trained. After the training is completed, the semantic mapper in the trained text reconstruction model may correspond to $W^{(s)}$ and $W^{(d)}$ in the preceding expressions (2) and (3), and the biaser in the trained text reconstruction model may correspond to $b^{(s)}$ and bed) in the preceding expressions (2) and (3).

Noise $\varepsilon$ is injected into the second semantic term of the sample text element, where $\varepsilon \sim N(0,1)$. The noise $\varepsilon$ is Gaussian noise, also referred to as a Gaussian-distributed random variable, and the noise $\varepsilon$ follows a standard normal distribution with a mean of 0 and a variance of 1.

After the noise addition is performed on the second semantic term of the sample text element, the second semantic term of the sample text element becomes the noise term, and the noise term may be expressed as follows:

$$Z_i^d = \epsilon * \left( W^d * Z_i + b^d \right) \qquad (6)$$

The electronic device 110 may determine the vector length of the noise term based on a 2-norm (Euclidean norm), and the 2-norm is a method for measuring the size of a vector in a vector space. In addition to the 2-norm, the vector length of the noise term may also be determined by means of Manhattan norm, Chebyshev norm, etc.

The electronic device 110 may determine the penalty term for the vector length based on a logarithm. If the vector length of the second semantic term $Z_i^{s2} = W^d * Z_i + b^d$ in the noise term approaches 0, the vector length of the noise term will approach 0 regardless of the value of the noise $\epsilon$. The significance of the penalty term is that if the vector length of the second semantic term $Z_i^{s2} = W^d * Z_i + b^d$ in the noise term approaches 0, the result of taking the logarithm of the second semantic term will approach infinity. Therefore, it can be concluded that the noise loss function may be expressed as follows:

$$L_{reg}(x) = \frac{1}{n} \sum_{i=1}^{n} \sum_{j=1}^{dz} \left( \frac{1}{2} \left\| Z_i^d \right\|_2^2 - \log\left( \left| Z_{ij}^d \right| \right) \right) \qquad (7)$$

In the expression of the noise loss function, x represents sample text elements in the text element set in the sample text 401, and x includes the sample text elements $W_i$ to $W_n$ shown in FIG. 4, and n corresponds to the number of sample text elements in the sample text. $Z_i^d$ may correspond to the noise term of the i-th sample text element $W_i$, $1 \leq i \leq n$. $Z_{ij}^d$ may correspond to a vector of the noise term of the i-th sample text element $W_i$ in the j-th dimension, $1 \leq j \leq dz$. dz may represent the number of dimensions of the noise term, such as 32 dimensions, 64 dimensions, etc.

Therefore, in the expression of the noise loss function, if the vector length ( $\left\| Z_i^d \right\|_2^2$ ) of the noise term $Z_i^d$ approaches 0, the result of taking the logarithm ( $\log\left( \left| Z_{ij}^d \right| \right)$ ) of the vector length will approach infinity. Therefore, the control of the amplitude of noise addition can be realized through the noise loss function, so that the added noise is balanced.

In some embodiments, determining the similarity loss function includes: obtaining a similarity result based on a similarity, where the similarity indicates a similarity between a text feature of each sample text element in the sample text feature after the noise addition and a text feature of each corresponding sample text element in the sample text feature; and determining the similarity loss function based on the similarity result.

Still with reference to the processing process of the first sub-model in FIG. 4, taking the i-th sample text element as an example, the text feature of the i-th sample text element in the sample text after the noise addition may be represented as $h_i^{re}$. Before the noise addition, the text feature of the i-th sample text element in the sample text may be represented as $h_i$. Based on this, the similarity between the text feature of the i-th sample text element in the sample text feature after the noise addition and the text feature of the i-th sample text element in the sample text feature before the noise addition may be represented as $\left\| h_i^{re} - h_i \right\|_2^2$ by using the 2-norm.

The similarity of the respective sample text elements may be represented by using the similarity loss function. The similarity loss function may be expressed as follows:

$$L_{mse}(x) = \frac{1}{n} \sum_{i=1}^{n} \left\| h_i^{re} - h_i \right\|_2^2 \qquad (8)$$

In the expression of the similarity loss function, x represents sample text elements in the text element set in the sample text 401, and x includes the sample text elements $W_i$ to $W_n$ shown in FIG. 4, and n corresponds to the number of sample text elements in the sample text. $h_i^{re}$ may be the text feature of the i-th sample text element in the sample text after the noise addition, $1 \leq i \leq n$. $h_i$ may be the text feature of the i-th sample text element in the sample text before the noise addition. By calculating the 2-norm of the difference between the text features, the similarity between the text features before and after the noise addition may be obtained.

After the expressions of the noise loss function and the similarity loss function are determined, the expression of the noise loss function $L_{re}$ may be obtained based on the expressions of the two loss functions. The noise loss function $L_{re}$ may be expressed as follows:

$$L_{re=} -\frac{1}{|D|}\sum_{x\in D}(L_{reg}(x)+L_{mse}(x)) \qquad (9)$$

In the expression of the noise loss function, D represents the set of sample text elements in the sample text. $L_{reg}(x)$ and $L_{mse}(x)$ respectively correspond to the content in the expressions (7) and (8). Since the text reconstruction model to be trained includes the first sub-model and the second sub-model, correspondingly, the noise loss function also includes the first noise loss function $L_{re}$ corresponding to the first sub-model and the second noise loss function $L_{re}'$ corresponding to the second sub-model.

In some embodiments, the difference used to train the text reconstruction model may further include a detection result loss function between the first detection result and the second detection result, a first detection loss function between the first detection result and the labeling result of the text sample, and a second detection loss function between the second detection result and the labeling result of the text sample.

When the text reconstruction model is trained, in addition to referring to the noise loss function indicating the difference between the sample text feature after the noise addition and the sample text feature, a detection result loss function $L_{sc}$ indicating the difference between the detection results obtained by the two sub-models may also be referred to. In addition, a first detection loss function $L_{cls}$ between the first detection result and the labeling result and a second detection loss function $L_{cls}'$ between the second detection result and the labeling result may also be referred to.

The multiple loss functions are considered comprehensively, and when the text reconstruction model is trained, the multiple loss functions may be weighted and summed. The weighted summation may be expressed as follows:

$$L_{all}=\lambda_1*（L_{cls}+L_{cls}'）+\lambda_2*（L_{re}+L_{re}'）+\lambda_3*L_{sc} \qquad (10)$$

In the expression of the weighted summation, $\lambda_1$, $\lambda_2$, and $\lambda_3$ respectively correspond to weight coefficients, $L_{cls}$ may be the first detection loss function between the first detection result and the labeling result, $L_{cls}'$ may be the second detection loss function between the second detection result and the labeling result, $L_{re}$ may be the first noise loss function between the first sample feature and the sample text feature, $L_{re}'$ may be the second noise loss function between the second sample feature and the sample text feature, and $L_{sc}$ may be the detection result loss function between the first detection result and the second detection result.

The detection result loss function between the first detection result and the second detection result is determined according to a symmetric divergence between the first detection result and the second detection result.

The first detection result and the second detection result are generated by the first sub-model and the second sub-model, respectively. Since the first sub-model and the second sub-model may have certain random differences when performing the noise addition, it means that the first detection result and the second detection result may also have differences. Generally, the difference between the first detection result and the second detection result may be relatively small, for example, the difference is within 1%. The symmetric divergence between the first detection result and the second detection result is very sensitive to a slight difference. This means that if the two detection results have only a slight difference, the symmetric divergence will give a larger value to reflect such a slight difference. The slight difference amplified by the symmetric divergence may help the model in training to understand the reason for the slight difference between the first sub-model and the second sub-model, so that the model can be better and optimally trained.

In addition, for the first detection loss function between the first detection result and the labeling result and the second detection loss function between the second detection result and the labeling result, a cross-entropy loss function may be used. The advantage of cross-entropy is that it is a loss function for supervised learning, which can better measure the difference between the prediction result of a single model and the real label.

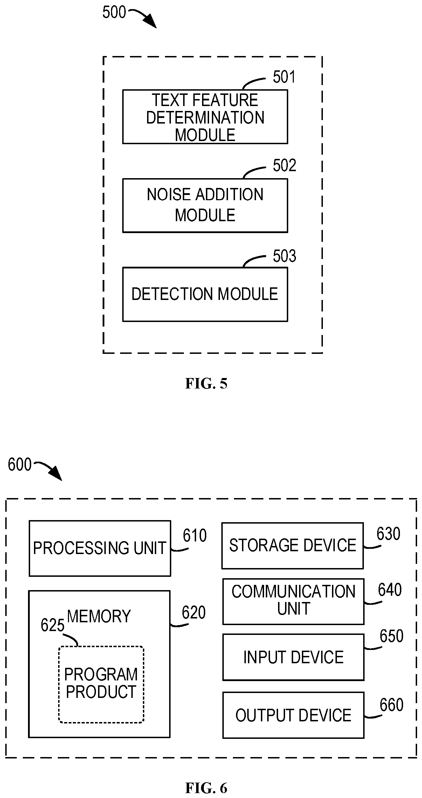

FIG. 5 shows a schematic structural block diagram of an apparatus 500 for digital assistant creation according to some embodiments of the present disclosure. The apparatus 500 may be implemented in or included in the electronic device 110, for example. Various modules/components in the apparatus 500 may be implemented by hardware, software, firmware, or any combination thereof.

As shown, the apparatus 500 includes a text feature determination module 501 configured to determine a text feature of a target text; a noise addition module 502 configured to perform, by using a trained text reconstruction model, noise addition on the text feature to obtain a text feature after noise addition, where the noise addition includes performing noise addition on a text feature corresponding to a text element in the target text; and a detection module 503 configured to determine, by using a trained text detection model and based on the text feature after noise addition, a detection result of the target text, where the detection result indicates whether the target text is generated by a machine learning model.

In some embodiments, the noise addition module 502 includes a semantic term determination sub-module configured to determine, based on the text feature of the text element, semantic terms of the text element, where the semantic terms indicate a semantic feature of the text element, and the semantic terms at least include a first semantic term and a second semantic term; a noise addition sub-module configured to perform the noise addition on the second semantic term to obtain a noise term; and a synthesis sub-module configured to determine, based on the first semantic term and the noise term, a noise addition result of the text element.

In some embodiments, the semantic term determination sub-module includes a semantic mapping unit configured to perform, by using a semantic mapper in the text reconstruction model, semantic feature mapping on the text feature of the text element to obtain a semantic mapping result; and a bias determination unit configured to determine, by using a biaser in the text reconstruction model, a bias of the semantic mapping result to obtain the semantic term of the text element.

In some embodiments, the text reconstruction model and the text detection model are jointly trained.

In some embodiments, a text reconstruction model training module is further included. The text reconstruction model to be trained includes a first sub-model and a second sub-model with the same architecture. The text reconstruction model training module is configured to perform, by using the text reconstruction model to be trained, noise addition on a sample text feature of a sample text to obtain a sample text feature after noise addition, where the sample text feature after noise addition includes a first sample feature obtained by performing, by a first sub-model, noise addition on the sample text feature, and a second sample feature obtained by performing, by a second sub-model, noise addition on the sample text feature; determine, by using the text detection model and based on the sample text feature after noise addition, a sample detection result, where the sample detection result includes a first detection result determined based on the first sample feature, and a second detection result determined based on the second sample feature; train the text reconstruction model to be trained based on a difference to obtain the trained text reconstruction model, where the difference at least indicates a noise loss function between the sample text feature after noise addition and the sample text feature, and the noise loss function includes a first noise loss function between the first sample feature and the sample text feature, and a second noise loss function between the second sample feature and the sample text feature; and retain one of the first sub-model or the second sub-model in the trained text reconstruction model.

In some embodiments, the noise loss function between the sample text feature after noise addition and the sample text feature is determined by a similarity loss function and a noise loss function, where the similarity loss function is used to indicate a similarity between the sample text feature after noise addition and the sample text feature, and the noise loss function is used to indicate a penalty rule for an amplitude of noise addition.

In some embodiments, determining the noise loss function includes: for a sample text element in the sample text, obtaining a noise term of a text feature of the sample text element, where the text feature of the sample text element includes a first semantic term of the sample text element and a second semantic term of the sample text element, and the noise term is obtained by performing the noise addition on the second semantic term of the sample text element; determining a vector length of the noise term, where the vector length is used to indicate semantic richness of the sample text element; determining a penalty term for the vector length, where the penalty term is configured to be inversely proportional to a value of the vector length; and determining the noise loss function based on the vector length and the penalty term.

In some embodiments, determining the similarity loss function includes: obtaining a similarity result based on a similarity, where the similarity indicates a similarity between a text feature of each sample text element in the sample text feature after the noise addition and a text feature of each corresponding sample text element in the sample text feature; and determining the similarity loss function based on the similarity result.

In some embodiments, the difference further indicates at least one of: a detection result loss function between the first detection result and the second detection result, a first detection loss function between the first detection result and a labeling result of the text sample, and a second detection loss function between the second detection result and the labeling result of the text sample.

In some embodiments, the detection result loss function between the first detection result and the second detection result is determined according to a symmetric divergence between the first detection result and the second detection result.

FIG. 6 shows a block diagram of an electronic device 600 in which one or more embodiments of the present disclosure can be implemented. It should be understood that the electronic device 600 shown in FIG. 6 is merely exemplary, and should not constitute any limitation to the functions and scope of the embodiments described herein. The electronic device 600 shown in FIG. 6 may include or be implemented as the electronic device 110 in FIG. 1 or the apparatus 500 in FIG. 5.

As shown in FIG. 6, the electronic device 600 is in the form of a general-purpose electronic device. The components of the electronic device 600 may include, but are not limited to, one or more processors or processing units 610, a memory 620, a storage device 630, one or more communication units 640, one or more input devices 650, and one or more output devices 660. The processing unit 610 may be an actual or virtual processor and can perform various processing according to a program stored in the memory 620. In a multi-processor system, multiple processing units execute computer-executable instructions in parallel to improve the parallel processing capability of the electronic device 600.

The electronic device 600 generally includes multiple computer storage media. Such media may be any available media accessible to the electronic device 600, including but not limited to volatile and non-volatile media, and removable and non-removable media. The memory 620 may be a volatile memory (for example, a register, a cache, a random access memory (RAM)), a non-volatile memory (for example, a read-only memory (ROM), an electrically erasable programmable read-only memory (EEPROM), a flash memory), or a combination thereof. The storage device 630 may be a removable or non-removable medium, and may include a machine-readable medium, such as a flash drive, a magnetic disk or any other medium, which may be used to store information and/or data and may be accessed within the electronic device 600.

The electronic device 600 may further include additional removable/non-removable, volatile/non-volatile storage media. Although not shown in FIG. 6, a disk drive for reading from or writing to a removable, non-volatile disk (for example, a "floppy disk") and an optical disk drive for reading from or writing to a removable, non-volatile optical disk may be provided. In these cases, each drive may be connected to a bus (not shown) by one or more data medium interfaces. The memory 620 may include a computer program product 625 having one or more program modules configured to perform various methods or actions of various embodiments of the present disclosure.

The communication unit 640 implements communication with other electronic devices through a communication medium. Additionally, the functions of the components of the electronic device 600 may be implemented with a single computing cluster or multiple computing machines that can communicate through a communication connection. Therefore, the electronic device 600 may operate in a networked environment using a logical connection to one or more other servers, network personal computers (PCs), or another network node.

The input device 650 may be one or more input devices, such as a mouse, a keyboard, a trackball, etc. The output device 660 may be one or more output devices, such as a display, a speaker, a printer, etc. The electronic device 600 may also communicate with one or more external devices (not shown) as needed through the communication unit 640, the external devices such as a storage device, a display device, etc., communicate with one or more devices that enable a user to interact with the electronic device 600, or communicate with any device that enables the electronic device 600 to communicate with one or more other electronic devices (for example, a network card, a modem, etc.). Such communication may be performed via an input/output (I/O) interface (not shown).

According to an exemplary implementation of the present disclosure, a computer-readable storage medium is provided, on which computer-executable instructions are stored, where the computer-executable instructions are executed by a processor to implement the method described above. According to an exemplary implementation of the present disclosure, a computer program product is further provided, the computer program product is tangibly stored on a non-transitory computer-readable medium and includes computer-executable instructions, and the computer-executable instructions are executed by a processor to implement the method described above.

According to an exemplary implementation of the present disclosure, a computer program product or a computer program is provided, the computer program product or the computer program including computer instructions, the computer instructions being stored in a computer-readable storage medium. A processor of a computer device reads the computer instructions from the computer-readable storage medium, and the processor executes the computer instructions to cause the computer device to execute the method provided in various optional implementations in FIG. 2 to FIG. 4, which will not be repeated here.

Various aspects of the present disclosure are described here with reference to the flowcharts and/or block diagrams of the method, apparatus, device, and computer program product implemented according to the present disclosure. It should be understood that each block of the flowcharts and/or block diagrams and a combination of the blocks in the flowcharts and/or block diagrams may be implemented by computer-readable program instructions.

These computer-readable program instructions may be provided to a processing unit of a general-purpose computer, a special-purpose computer, or other programmable data processing apparatus, so as to produce a machine, so that these instructions, when executed by the processing unit of the computer or other programmable data processing apparatus, produce a device that implements the functions/actions specified in one or more blocks in the flowcharts and/or block diagrams. These computer-readable program instructions may also be stored in a computer-readable storage medium, and these instructions cause the computer, the programmable data processing apparatus, and/or other devices to work in a specific manner. Therefore, the computer-readable medium storing the instructions includes an article of manufacture, and the article of manufacture includes instructions that implement various aspects of the functions/actions specified in one or more blocks in the flowcharts and/or block diagrams.

The computer-readable program instructions may be loaded onto the computer, other programmable data processing apparatus, or other device, causing a series of operation steps to be executed on the computer, other programmable data processing apparatus, or other device to produce a computer-implemented process, so that the instructions executed on the computer, other programmable data processing apparatus, or other device implement the functions/actions specified in one or more blocks in the flowcharts and/or block diagrams.

The flowcharts and block diagrams in the drawings show possible architectures, functions, and operations of the system, method, and computer program product according to multiple implementations of the present disclosure. In this regard, each block in the flowchart or block diagram may represent a module, a program segment, or a part of an instruction, and the module, the program segment, or the part of the instruction includes one or more executable instructions for implementing specified logic functions. In some alternative implementations, the functions marked in the blocks may also occur in an order different from those marked in the drawings. For example, two consecutive blocks may actually be executed substantially in parallel, and sometimes they may be executed in a reverse order, depending on the functions involved. It should also be noted that each block in the block diagram and/or flowchart and a combination of the blocks in the block diagram and/or flowchart may be implemented by a dedicated hardware-based system that performs the specified functions or actions or may be implemented by a combination of dedicated hardware and computer instructions.

The implementations of the present disclosure have been described above, and the above description is exemplary, not exhaustive, and not limited to the disclosed implementations. Many modifications and changes are obvious to those of ordinary skills in this technical field without departing from the scope and spirit of the described implementations. The selection of terms used herein is intended to best explain the principles, practical applications, or improvements of the technologies in the market of the implementations or to enable other ordinary skilled people in this technical field to understand the implementations disclosed herein.

**Claims**

1. A text detection method (200), comprising:

   determining (201) a text feature of a target text;
   performing (202), by using a trained text reconstruction model, noise addition on the text feature to obtain a text feature after noise addition, wherein the noise addition comprises performing noise addition on a text feature corresponding to a text element in the target text; and
   determining (203), by using a trained text detection model and based on the text feature after noise addition, a detection result of the target text, wherein the detection result indicates whether the target text is generated by a machine learning model.

2. The method (200) according to claim 1, wherein performing the noise addition on the text feature corresponding to the text element in the target text comprises:

   determining, based on the text feature of the text element, semantic terms of the text element, wherein the semantic terms indicate a semantic feature of the text element, and the semantic terms at least comprise a first semantic term and a second semantic term;
   performing the noise addition on the second semantic term to obtain a noise term; and
   determining, based on the first semantic term and the noise term, a noise addition result of the text element.

3. The method (200) according to claim 2, wherein determining, based on the text feature of the text element, the semantic terms of the text element comprises:

   performing, by using a semantic mapper in the text reconstruction model, semantic feature mapping on the text feature of the text element to obtain a semantic mapping result; and
   determining, by using a biaser in the text reconstruction model, a bias of the semantic mapping result to obtain the semantic terms of the text element.

4. The method (200) according to any of claims 1 to 3, wherein the text reconstruction model and the text detection model are jointly trained.

5. The method (200) according to any of claims 1 to 4, wherein the text reconstruction model to be trained comprises a first sub-model and a second sub-model with a same architecture, and the text reconstruction model is trained by:

   performing, by using the text reconstruction model to be trained, noise addition on a sample text feature of sample text to obtain a sample text feature after noise addition, wherein the sample text feature after noise addition comprises a first sample feature obtained by performing, by the first sub-model, noise addition on the sample text feature, and a second sample feature obtained by performing, by the second sub-model, noise addition on the sample text feature;

determining, by using the text detection model and based on the sample text feature after noise addition, a sample detection result, wherein the sample detection result comprises a first detection result determined based on the first sample feature, and a second detection result determined based on the second sample feature;

training the text reconstruction model to be trained based on a difference to obtain the trained text reconstruction model, wherein the difference at least indicates a noise loss function between the sample text feature after noise addition and the sample text feature, and the noise loss function comprises a first noise loss function between the first sample feature and the sample text feature, and a second noise loss function between the second sample feature and the sample text feature; and

retaining one of the first sub-model or the second sub-model in the trained text reconstruction model.

6. The method (200) according to claim 5, wherein the noise loss function between the sample text feature after noise addition and the sample text feature is determined by a similarity loss function and a penalty noise loss function, the similarity loss function indicates a similarity between the sample text feature after noise addition and the sample text feature, and the penalty noise loss function indicates a penalty rule for an amplitude of noise addition.

7. The method (200) according to claim 6, wherein the determination of the penalty noise loss function comprises:

for a sample text element in the sample text, obtaining a noise term in a text feature of the sample text element, wherein the text feature of the sample text element comprises a first semantic term of the sample text element and a second semantic term of the sample text element, and the noise term is obtained by performing noise addition on the second semantic term of the sample text element;

determining a vector length of the noise term, wherein the vector length indicates semantic richness of the sample text element;

determining a penalty term for the vector length, wherein the penalty term is configured to be inversely proportional to a value of the vector length; and

determining the penalty noise loss function based on the vector length and the penalty term.

8. The method (200) according to claim 6, wherein the determination of the similarity loss function comprises:

obtaining a similarity result based on a similarity, wherein the similarity indicates a similarity between a text feature of each sample text element in the sample text feature after the noise addition and a text feature of each corresponding sample text element in the sample text feature; and

determining the similarity loss function based on the similarity result.

9. The method (200) according to claim 5, wherein the difference further indicates at least one of:

a detection result loss function between the first detection result and the second detection result,

a first detection loss function between the first detection result and a labeling result of the text sample, and

a second detection loss function between the second detection result and the labeling result of the text sample.

10. The method (200) according to claim 9, wherein the detection result loss function between the first detection result and the second detection result is determined according to a symmetric divergence between the first detection result and the second detection result.

11. An apparatus (500) for text detection, comprising:

a text feature determination module (501) configured to determine a text feature of a target text;

a noise addition module (502) configured to perform, by using a trained text reconstruction model, noise addition on the text feature to obtain a text feature after noise addition, wherein the noise addition comprises performing noise addition on a text feature corresponding to a text element in the target text; and

a detection module (503) configured to determine, by using a trained text detection model and based on the text feature after noise addition, a detection result of the target text, wherein the detection result indicates whether the target text is generated by a machine learning model.

12. An electronic device (600), comprising:

at least one processing unit (610); and

at least one memory (620) coupled to the at least one processing unit (610) and storing instructions for execution by the at least one processing unit (610), wherein the instructions, when executed by the at least one processing unit (610), cause the electronic device (600) to perform the method according to any one of claims 1 to 10.

13. A computer-readable storage medium having a computer program stored thereon, wherein the computer program is executable by a processor to implement the method according to any one of claims 1 to 10.

14. A computer program product comprising computer programs/instructions, wherein the computer programs/instructions, when executed by a processor, implement the method according to any one of claims 1 to 10.

100

110

ELECTRONIC DEVICE

102

TARGET
TEXT

115

TARGET
MODEL

112

DETECTION
RESULT

**FIG. 1**

200

201

DETERMINE A TEXT FEATURE OF A TARGET TEXT

202

PERFORM, BY USING A TRAINED TEXT RECONSTRUCTION
MODEL, NOISE ADDITION ON THE TEXT FEATURE TO OBTAIN
A TEXT FEATURE AFTER THE NOISE ADDITION, THE NOISE
ADDITION INCLUDING PERFORMING NOISE ADDITION ON A
TEXT FEATURE CORRESPONDING TO A TEXT ELEMENT IN
THE TARGET TEXT

203

DETERMINE, BY USING A TRAINED TEXT DETECTION MODEL
AND BASED ON THE TEXT FEATURE AFTER THE NOISE
ADDITION, A DETECTION RESULT OF THE TARGET TEXT, THE
DETECTION RESULT INDICATING WHETHER THE TARGET
TEXT IS GENERATED BY A MACHINE LEARNING MODEL

**FIG. 2**

FIG. 3

TEXT RECONSTRUCTION MODEL TO BE TRAINED

TEXT DETECTION MODEL

400

401

Lre

Lre'

Z1, Zi, Zn
Z1', Zi', Zn'

$Z_i^{s1}$, $Z_i^d$, NOISE
$Z_i^{s1}{}'$, $Z_i^d{}'$, NOISE

$\tilde{Z}_1$, $\tilde{Z}_i$, $\tilde{Z}_n$
$\tilde{Z}_1{}'$, $\tilde{Z}_i{}'$, $\tilde{Z}_n{}'$

$h_1^{re}$, $h_i^{re}$, $h_n^{re}$
$h_1^{re}{}'$, $h_i^{re}{}'$, $h_n^{re}{}'$

W1, Wi, Wn

h1, hi, hn

SPLITTING

ENCODING

DIMENSIONALITY REDUCTION

DIMENSIONALITY LIFTING

POOLING AND CLASSIFICATION

Lcls

Lcls'

Lsc

402

403

AI~ 80% non-AI~20%

AI~ 80.05% non-AI~19.95%

FIG. 4

EP 4 553 696 A2

19

500 ⌐

┌─────────────────────────────────┐
│                              ⌐ 501 │
│   ┌─────────────────────┐        │
│   │   TEXT FEATURE       │        │
│   │   DETERMINATION      │        │
│   │   MODULE             │        │
│   └─────────────────────┘        │
│                              ⌐ 502 │
│   ┌─────────────────────┐        │
│   │   NOISE ADDITION     │        │
│   │   MODULE             │        │
│   └─────────────────────┘        │
│                              ⌐ 503 │
│   ┌─────────────────────┐        │
│   │   DETECTION MODULE   │        │
│   └─────────────────────┘        │
└─────────────────────────────────┘

**FIG. 5**

600 ⌐

┌──────────────────────────────────────────────┐
│  ┌─────────────────┐ 610  ┌─────────────────┐ 630 │
│  │ PROCESSING UNIT │      │ STORAGE DEVICE  │   │
│  └─────────────────┘      └─────────────────┘   │
│                           ┌─────────────────┐ 640 │
│  ┌─────────────────┐ 620  │ COMMUNICATION   │   │
│  │  MEMORY         │      │ UNIT            │   │
│  │ 625             │      └─────────────────┘   │
│  │  ┌───────────┐  │      ┌─────────────────┐ 650 │
│  │  │ PROGRAM   │  │      │ INPUT DEVICE    │   │
│  │  │ PRODUCT   │  │      └─────────────────┘   │
│  │  └───────────┘  │      ┌─────────────────┐ 660 │
│  └─────────────────┘      │ OUTPUT DEVICE   │   │
│                           └─────────────────┘   │
└──────────────────────────────────────────────┘

**FIG. 6**